# EUROPEAN PATENT SPECIFICATION

(11) **EP 1 634 792 B1**
(45) Date of publication and mention of the grant of the patent: **03.09.2008**
(21) Application number: 05254452.5
(22) Date of filing: 16.07.2005
(51) Int. Cl.: B61D 47/00, B61D 3/18

(54) **A rail terminal located pop-up mechanism for the rotating lowfloor platforms of road/rail intermodal wagon**
In einer Anlage eingebaute Hebevorrichtung für die schwenkbare Ladeplattform eines für den Transport von Sattelanhängern vorgesehenen Niederflurwaggons
Mechanisme fixe de soulèvement des plateformes tournantes de wagon-poche dans les terminaux intermodaux

(30) Priority: 26.07.2004 GB 0416553
(43) Date of publication of application: 15.03.2006
(73) Proprietor: Cholerton Limited, Ramsey Isle of Man IM8 2LQ (GB); Brown, John George, Ramsey, Isle of Man IM8 2LQ (GB)
(72) Inventor: Brown, John George, Isle of Man IM8 2LQ (GB)

(56) References cited:
- EP-A- 1 348 603
- EP-B- 0 453 537
- WO-A-93/18951
- DE-C1- 10 118 510
- DE-U1- 29 610 767
- US-A- 2 783 900

## Description

We, CHOLERTON LIMITED, a British Company of Chrystals Building, Bowring Road, Ramsey, Isle of Man and JOHN GEORGE BROWN, a British subject, do hereby declare this invention for which we pray that a patent may be granted to us, and the method by which it is to be performed, to be particularly described in and by the following statement.

This invention has reference to the exchanges from road to rail and *vice versa* of unaccompanied road semitrailers during intermodal interchanges.

It is known to provide special rail wagons of wellwagon type wherein the well is equipped with a series of pockets into which the road wheels of a semitrailer rest upon being lowered. The Lift On-Lift Off procedure of special liftable semitrailers is achieved by expensive travelling gantry cranes or by expensive heavy-duty lift trucks loading and/or unloading non-standard liftable semitrailers one-at-a-time along the length of the train. This time consuming and costly road to rail interchange procedure requiring special liftable semitrailers is commercially viable only for stage distances of 500 kilometres plus. In recent years a variety of systems for non-lifting road to rail horizontal interchanges of semitrailers have been promoted, but with little acceptance by the freight forwarding and logistics industry. One system capable of interchanging standard semitrailers involves wellwagons which disconnect from their bogie ends and very complex in-terminal mechanisms to unlock the centre sections of the wagons and to rotate the disconnected sections. The sytem is not viable commercially and is dependant upon very substantial government subsidies.

The present invention has therefore for it's objective to efficiently and cost-effectively perform the elevation and rotation of the moveable wellfloors of bogie wellwagons in the manner detailed in European Patent No. 0 453 537 J.G.Brown 1989 whereby standard non-liftable road semitrailers are loaded on and unloaded from rail wagons by Roll On-Roll Off mode.

Accordingly a railfreight terminal, either end-of-line or intermediate, is equipped with a series of 'Pop-Up' mechanisms of the invention. Each mechanism is comprised of a fixed vertically mounted standing tube located in a tubular socket secured centrally between the rails of railtrack foundations. Concentric with the standing tube is a sliding tube which is powered to raise; rotate, and lower relative to the standing tube. Surmounted on the top of the sliding tube is a horizontally located rectangular frame having upwards pointing twistlocks at each of the four corners to engage in slots on the underside of moveable wellfloors. Centrally positioned on the top of the sliding tube is a prime mover, typically a slow-speed hydraulic motor, which rotates an internal screw-jack leadscrew on the vertical axis of the tubes. Near to the top of the standing tube is an anchor block which supports a fixed threaded nut through which the leadscrew raises and lowers simultaneously raising and lowering the sliding tube and twistlock frame. Upon reaching maximum height when the underside of the wellfloor is above wagon sides and platform levels, a flange secured to the bottom end of the leadscrew comes into contact with the underside of the anchorblock to which it is locked against rotation by mechanical or by electromagnetic brake. With the leadscrew locked against rotation, activation of the prime-mover rotates the sliding tube and twistlock frame on a vertical axis about the standing tube to turn the wellfloor with arriving semitrailer superimposed into alignment with waiting consignee's cabtractor on one side of the railtrack, and alignment with consignor's cabtractor and departing semitrailer on the opposite side of the railtrack. Unlocking of the leadscrew permits the wellfloor to be lowered slightly to rest on the platform edges diagonally across the railtrack.

The invention will now be described with reference to the accompanying drawings wherein :-
Fig. 1 is a side elevation showing the retracted location of the mechanism in relation to railwagon having wellfloor at it's lowered rail transit height.
Fig. 2 is a side elevation showing the mechanism at maximum height with the underside of the wellefloor above the wagon sides and above adjacent platform level.
Fig. 3 is a plan view showing how the mechanism rotates the wellfloor from alignment with the wagon to alignment with the platform roadwheel kerbs.
Fig. 4 is an end elevation of the mechanism at maximum height.
Fig. 5 is a plan view of the top frame of the mechanism which connects to the undersides of wellfloors.
Fig. 6 is a side elevation of the mechanism lifted by forktruck or crane to permit repair, or maintenance, by replacement rather than *in situ.*

In the drawings 1 denotes the mechanism, 2 denotes the wellfloor of a railwagon 3, 4 denotes a standard non-liftable road semitrailer, 5 denotes a cabtractar for movement of semitrailers on and off wellfloors, 6 denotes roadwheel kerbs on the platform or on ground if the railtrack is laid in a trench, 7 denotes automatically folding end ramps of the wellfloor, 8 denotes the mechanism vertical axis, 9 denotes a foundation-embedded steel tubular socket into which the mechanism 1 fits, 10 denotes the standing inner tube of the mechanism, 11 denotes the outer sliding tube of the mechanism, 12 denotes a top frame rigidly secured to the sliding tube 11 by substantial brackets 13, 14 denotes twistlocks whereby the mechanism 1 is connected to the wellfloor 2, 15 denotes a linkage and bell-cranks which turn the twistlocks in unison, 16 denotes hydraulic or mechanical actuators which activate the linkage, 17 denotes a slow-speed high-torque hydraulic motor, 18 denotes a screw-jack leadscrew, 19 denotes a threaded nut through which the leadscrew raises and lowers, 20 denotes an anchorblock rigidly secured in the standing inner tube 10, 21 denotes a thrust roller bearing to transmit the leadscrew 18 thrust to the sliding tube 11, 22 denotes a flange rigidly connected to the lower end of the leadscrew 18, 23 denotes upwards pointing taper-nosed pins rigidly connected to flange 24 of socket 9, 25 denotes a flange rigidly connected to the lower end of standing tube 10 having a series of holes through which pins 23 engage, 26 denotes a retractable pawl which engages in and disengages from a slot (not shown) in sliding tube 11, and 27 denotes an electromagnetic brake to hold flange 22 secure when the mechanism 1 is at maximum height.

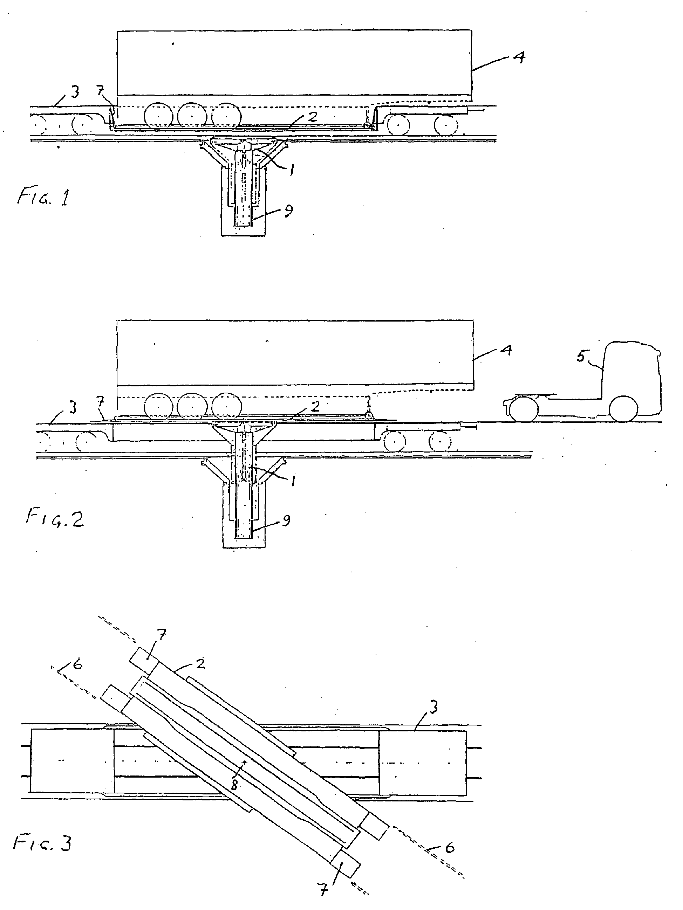

In Fig. 1 the wellfloor 2 of rail wellwagon 3 rests securely in the wagon. A standard non-liftable semitrailer 4 rests on wellfloor 2 supported by it's roadwheels and jockey wheels. The underside of the wellfloor 2 has four slots aligned with the railtrack; said slots having lengths widths and locations for entry of the twistlocks 14 of Pop-Up mechanism 1. The length of the slots permits twistlocks entry over a train stop location tolerance of approximately 70 centimetres.

Upon entry to a freight terminal the wagons locate over the Pop-Up mechanisms 1 which are spaced at mid-wagon positions along the length of the terminal railtrack. At each wagon the sequence of Pop-Up mechanism movements is comprised of:-

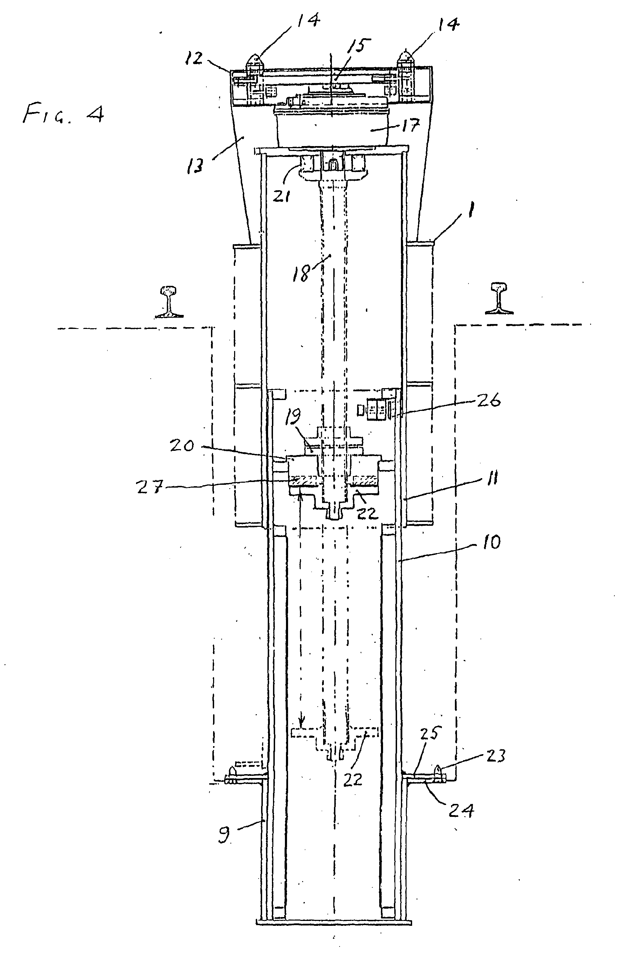

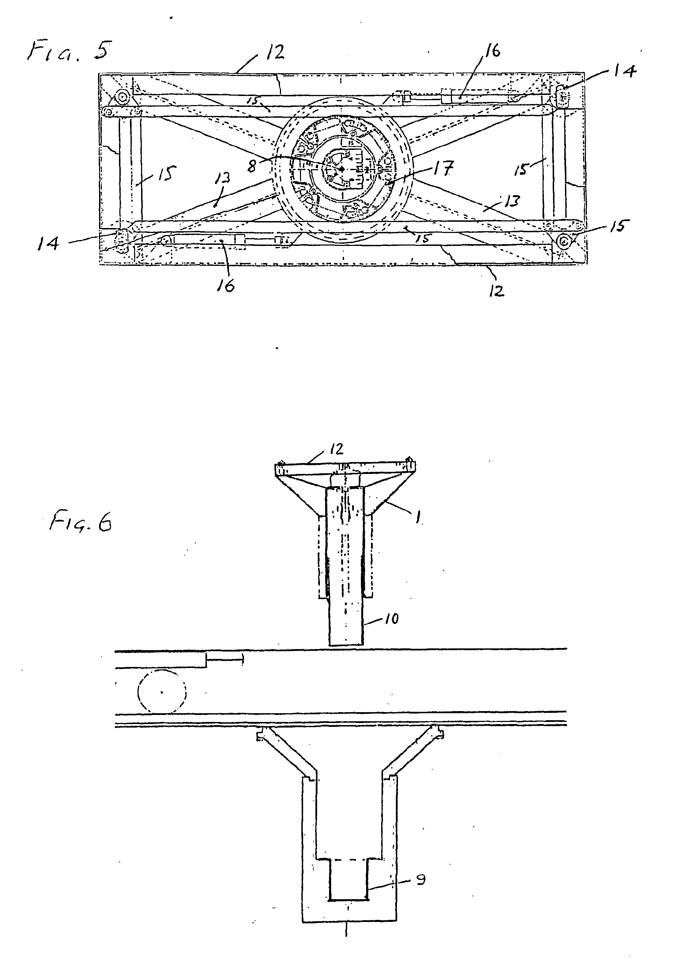

Sliding tube 11 in Fig. 4 elevates from the action of motor 17 turning leadscrew 18 in fixed nut 19 to raise the top surface of frame 12 in Fig. 5 from below rail level into contact with the underside of the wellfloor 2, and simultaneously entering the four twistlocks 14 in the wellfloor slots. At this level actuators 16 in Fig. 5 move the linkage 15 to turn the twistlocks 14 through 90 degrees thereby securing the Pop-Up mechanism 1 to the wellfloor 2. Leadscrew 18 is rotated again by motor 17 to elevate the sliding tube assembly with wellfloor 2 and semitrailer 4 superimposed to maximum height where leadscrew flange 22 comes into contact with brake 27 on anchorblock 20. At this height Fig. 2 the underside of the wellfloor is above platforms and wagon sides levels, and the wellfloor end ramps 7 have automatically folded down.

To prevent any tendency of the sliding tube 11 to rotate about standing tube 10 during elevation, pawl 26 (not shown) engaged in slot in sliding tube 11. At maximum elevation pawl 26 retracted from slot in sliding tube 11, and simultaneously brake 27 on anchor block 20 engages flange 22 to hold leadscrew against any rotation Fig. 4.

Rotation about vertical axis 8 of the Pop-Up mechanism sliding tube assembly with wellfloor 2 and semitrailer 4 superimposed Fig. 3, either about 36 degrees clockwise or about 144 degrees anti-clockwise dependant upon direction of entry of the train into the terminal, is achieved by slow turning of motor 17. Upon rotation to align welifloor 2 with roadwheel kerbs 6 on the platforms, pawl 26 re-engaged with another slot in sliding tube 11 simultaneously with release of leadscrew flange 22 from brake 27 followed by turning of motor 17 to lower the sliding tube assembly and wellfloor 2 to rest diagonally across the railtrack on the platform surfaces. Cabtractor 5 reverses to hitch-up semitrailer 4 to haul the arriving semitrailer from wellfloor 2. From the opposite side of the railtrack a departing semitrailer is hauled from alignment between kerbs 6 across the wellfloor by a cabtractor which positions the semitrailer prior to un-hitching and moving away.

Return of wellfloor 2 with departing semitrailer atop to rest at rail transit level in wellwagon 1 is accomplished step-by-step reverse order of the arriving semitrailer sequence. Following disengagement of the twistlocks the mechanism lowers to below rail level.

Repair and/or maintenance by replacement of the Pop-Up mechanism Fig. 6 is accomplished with the aid of a lift truck or crane (not shown) lifting the entire mechanism 1 from the foundation socket 9 following disconnection of quick-acting pipe and electric cable couplings (not shown). As the mechanism exits the socket 9, holes in flange 25 of the standing tube 10 disengage from the taper-nosed pins 23 integral with flange 24 of socket 9. A replacement mechanism is lowered into socket 9 with taper-nosed pins 23 engaging in the flange holes followed by re-connection of the quick-acting couplings.

By comparison with current lift on-lift off procedure involving special liftable semitrailers which are not popular with the road haulage industry, the numerous and significant merits of Pop-Up mechanisms include:- simultaneous and rapid interchanges of arriving and departing standard semitrailers by roll on-roll off mode; all wagon and wellfloor movements necessary for each semitrailer interchange by a single mechanism arranged for quick repair/maintenance by replacement; the wellfloor completely out of the wagon frame during semitrailer exchanges thereby avoiding the usual necessity for wagon suspension levelling apparatus; no time-consuming change from electric traction to diesel traction upon entering a terminal as necessary for lift off-lift on semitrailer exchanges due to roll off-roll on exchanges under the overhead electric catenary, and in economic terms approximately 25 Pop-Up mechanisms which can operate simultaneously cost the same as one travelling gantry crane which progresses one-by-one along the length of a train.

Intermodal road-to-rail movements of standard semitrailers will benefit from the invention which, in turn, should assist in the alleviation of road traffic congestion.

## Claims

1. A rail terminal mechanism (1) located between railtracks which attaches to the underside of a moveable wellfloor (2) of a railway wagon (3) then elevates the wellfloor with road semitrailer (4) superimposed above the levels of both railwagon sides and platforms prior to rotation of the wellfloor into alignment diagonally across the railtrack to permit exchange of arriving and departing standard non-liftable road semitrailers **characterized in that** the mechanism is comprised of a foundation (3) mounted vertical tube (10) upon which a sliding tube (11) is co-axially mounted and on the top of the sliding tube a frame (12) for wellfloor connection is positioned whereby both the elevation and rotation of the wellfloor is accomplished by a motor (17) in which the elevation of the sliding tube is activated by a rotating screw-jack leadscrew (18) and turning of the sliding tube (11) and wellfloor (12) connecting frame is achieved by locking the leadscrew to permit the motor to rotate the sliding tube and wellfloor connecting frame about the vertical axis of the standing tube.

## Patentansprüche

1. Ein Endstation Mechanismus (1) errichtet zwischen zwei Eisenbahngleisen, welches an der Unterseite eines beweglichen Schachtbodens (2) von Eisenbahnwaggons (3) befestigt ist, dann den Schachtboden mit Sattelschlepper (4) hebt, überlagert über der Ebene auf beiden Eisenbahnwaggon-Seiten und Plattformen, bevor Drehung des Schachtbodens gegen Ausrichtung der Diagonale Ober die Gleise, um den Austausch ankommender und abfahrender nicht hebfähigen Normal-Sattelschlepper zu gewährleisten, **gekennzeichnet** insofern als daß der Mechanismus aus einem Fundament (9) besteht, welches mit senkrechten Rohren (10) versehen ist, an welchen ein Schieberohr mit-achsig befestigt ist und auf welchem oberhalb des Schieberohrs ein Rahmen (12) für die Schachtbodenverbindung aufgestellt ist, wobei die Hebung wie auch die Drehung des Schachtbodens durch einen Motor (17) erreicht wird, bei dem die Hebung des Schieberohrs durch eine rotierende Schrauben-Ladestütz-Leitspindel (18) betätigt wird, und das Drehen des Schieberohrs (11) und des Schachtboden- (12) Verbindungsrahmen wird durch das Schließen der Leitspindel erreicht, damit der Motor das Schieberohr und den Schachtboden-Verbindungsrahmen um die senkrechte Achse des stehenden Rohrs rotieren kann.

## Revendications

1. Un mécanisme de terminal ferroviaire (1) placé entre voies ferrées se fixant sur le dessous d'un plancher mobile (2) de wagon ferroviaire (3) puis élève la plancher mobile avec une semi-remorque (4) superposée au-dessus du niveau a la fois des côtés du wagon ferroviaire et des quais préalablement à la rotation de la plancher mobile pour aligner celle-ci sur un plan diagonal en travers de la voie afin de permettre l'éxchange de semi-remorques non levantes standards arrivant et partant **caractérisé par le fait que** le mécanisme est composé d'un tube vertical (10) monté sur fondation (9) sur lequel un tube coulissant (11) est monté de façon co-axiale et que sur le dessus du tube coulissant est placé un châssis (12) de raccordement de plancher mobile est accompli par un moteur (17) de sorte que le levage du tube coulissant est activé par un vis-d'jack (18) et que la rotation du tube coulissant (11) et du châssis de raccordement de la plancher mobile (12) s'effectue en bloquant la vis-d'jack en permettant ainsi au moteur d'assurer la rotation du tube coulissant et la plancher mobile dans l'axe vertical du montant tubulaire.
